# NEUE EUROPÄISCHE PATENTSCHRIFT

(11) **EP 1 034 084 B2**
(45) Veröffentlichungstag und Bekanntmachung des Hinweises auf die Entscheidung über den Einspruch: **16.05.2007**
(45) Hinweis auf die Patenterteilung: 18.08.2004
(21) Anmeldenummer: 98948922.4
(22) Anmeldetag: 07.09.1998
(51) Int. Cl.: B60H 1/00

(54) **ZUR ANORDNUNG IN EINEM KRAFTFAHRZEUG VORGESEHENER LÜFTUNGSKASTEN**
VENTILATION BOX FOR ARRANGEMENT IN A MOTOR VEHICLE
BOITE DE VENTILATION DESTINEE A ETRE AGENCEE DANS UN VEHICULE

(30) Priorität: 09.09.1997 DE 19740402
(43) Veröffentlichungstag der Anmeldung: 13.09.2000
(73) Patentinhaber: SIEMENS AKTIENGESELLSCHAFT, 80333 München (DE)
(72) Erfinder: DÖHRING, Klaus, D-63741 Aschaffenburg (DE); KURR, Klaus Jürgen, D-64832 Babenhausen (DE); WICH, Rolf, D-63512 Hainburg (DE)
(86) Internationale Anmeldenummer: PCT/EP1998/005663
(87) Internationale Veröffentlichungsnummer: WO 1999/012756

(56) Entgegenhaltungen:
- EP-A- 0 595 336
- EP-A- 0 799 734
- EP-A- 0 816 145
- FR-A- 2 472 983
- FR-A- 2 623 776
- FR-A- 2 664 539
- FR-A- 2 741 842
- US-A- 5 111 738
- PATENT ABSTRACTS OF JAPAN vol. 009, no. 025 (M-355), 2. Februar 1985 & JP 59 171712 A (MITSUBISHI DENKI KK), 28. September 1984

## Beschreibung

Zur Anordnung in einem Kraftfahrzeug vorgesehener Lüftungskasten

Die Erfindung betrifft einen zur Anordnung in einem Kraftfahrzeug vorgesehenen Lüftungskasten gemäß den Merkmalen des Oberbegriffs des Patentanspruchs 1.

Aus der US 5,111,738 A1 ist ein Luftgebläse für ein Heizungs- und Belüftungssystem für Kraftfahrzeuge bekannt. Das Gebläse schließt zwei hauptsächlich symmetrische Halbschalen ein, die zusammen eine Diffusorkammer bilden. In der Diffusorkammer ist ein Motor angeordnet, welcher mit einem Rotor verkuppelt ist. Jede Halbschale beinhaltet eine zentrale Öffnung und eine seitliche Halböffnung, wobei die zentralen Öffnungen den Lufteinlass und die seitlichen Öffnungen den Luftauslass bilden.

Solche Lüftungskästen werden in heutigen Kraftfahrzeugen mit mehreren, an verschiednen Stellen angeordneten Ansaug- und Ausblasöffnungen häufig an der Stirnseite der Fahrgastzelle befestigt und sind in vielfältigen Gestaltungen aus der Praxis bekannt. Innerhalb des Lüftungskastens sind verschiedene Lüftungsklappen und häufig ein Gebläse sowie eine Heiz- oder Kühleinrichtung angeordnet. Hierdurch stellt der Lüftungskasten ein sehr sperriges und großvolumiges Bauteil dar und wird neben oder unter angrenzenden Bauteile wie beispielsweise Armaturentafel und Lenksäule des Kraftfahrzeuges montiert. Da die Form und die Lage der angrenzenden Bauteile in dem Kraftfahrzeug in der Regel vorgegeben ist, werden die Gehäuseteile des Lüftungskastens an die angrenzenden Bauteile angepasst.

Dies ist insbesondere für Kraftfahrzeuge von Nachteil, die für eine wahlweise Anordnung der Lenksäule auf der rechten oder der linken Fahrzeugseite vorgesehen sind. Hierdurch ist es erforderlich, in Abhängigkeit von der Anordnung der Lenksäule unterschiedlich gestaltete Lüftungskästen vorzusehen. Alternativ dazu könnte man den Lüftungskasten ausschließlich in der Fahrzeugmitte anordnen. Dies ist jedoch nur bei Lüftungskästen mit sehr kleinen Abmessungen möglich.
Die gattungsbildende FR 2 472 993 A offenbart eine Klimaanlage mit einer Gebläseeinheit und einem Verdampfer, welche sich beide in einem Motorraum befinden, und mit einer Heizeinheit und Auslässen, welche in einem Fahrgastraum angeordnet sind. Der Verdampfer und die Heizeinheit können nahe der Längsmittellinie eines Fahrzeugs angeordnet und sowohl für links- als auch für rechtsgelenkte Fahrzeuge verwendet werden. Von der Gebläseeinheit, einem Leitungsstück und einem Ansaugschacht sind jedoch für links- und rechtsgelenkte Fahrzeuge verschiedene Ausführungen notwendig, so daß es je nach Lenkradposition verschiedene Ausführungen der Gebläseeinheit, des Leitungsstücks und des Ansaugschachtes gibt.

Der Erfindung liegt das Problem zugrunde, einen Lüftungskasten der eingangs genannten Art so zu gestalten, daß er für den Einsatz in Fahrzeugen mit der Lenksäule auf der linken oder der rechten Fahrzeugseite gleichermaßen geeignet ist und dennoch großvolumig gestaltet sein kann.

Dieses Problem wird durch die Maßnahmen des Anspruchs 1 gelöst.

Durch diese Gestaltung lassen sich in den Bereich der Lenksäule hineinragende Gehäuseteile des erfindungsgemäßen Lüftungskasten einfachauf der der Lenksäule des Kraftfahrzeuges gegenüberliegenden Seite anordnen. Deshalb benötigt man für ein Kraftfahrzeug, welches für die wahlweise Anordnung der Lenksäule auf der linken oder der rechten Fahrzeugseite vorgesehen ist, nur einen einzigen erfindungsgemäßen Lüftungskasten. Dank der Erfindung erfordert die Fertigung der Gehäuseteile für verschieden gestaltete Lüftungskästen zudem eine besonders geringe Anzahl von Preß- oder Spritzgießformen. Dies ist insbesondere bei einer Serienfertigung des erfindungsgemäßen Lüftungskastens von Vorteil, da sich hierdurch Kosten für Lagerhaltung und Ersatzteile deutlich vermindern.

Die Gestaltung des erfindungsgemäßen Lüftungskastens wird noch weiter vereinfacht und die Variantenanzahl seiner einzelnen Bauteile weiter vermindert. Fertigungs- und Logistikkosten werden auf diese Weise zusätzlich gesenkt. Insbesondere ist es auch von Vorteil, daß bei diesem Lüftungskasten die Trennebene - und somit auch die Verbindungselemente wie z. B. ein Verbindungsflansch - zwischen den verdrehbaren Gehäuseteilen besonders großflächig ausgeführt werden kann, womit eine hohe mechanische Stabilität und ein großer Strömungsquerschnitt des Lüftungskastens erzielt wird.

Häufig haben die bekannten Lüftungskästen beispielsweise in einem Fußraum der Fahrgastzelle oder einer Ausnehmung einer Stirnwand des Kraftfahrzeuges anzuordnende, vertikal ausgerichtete Ansaugöffnungen. Man könnte daran denken, die Ansaugöffnungen auf der vorderen und der hinteren Seite des Lüftungskastens anzuordnen und nicht benötigte Ansaugöffnungen mit einem Blindstopfen zu verschließen. Durch die Fertigung und die Montage der Blindstopfen gestaltet sich der Lüftungskasten sehr kostenintensiv. Der Lüftungskasten besteht gemäß einer vorteilhaften Weiterbildung der Erfindung aus sehr wenigen Bauteilen, wenn ein Ansaugöffnungen aufweisendes Gehäuseteil an angrenzenden Gehäuseteilen zur wahlweisen Befestigung mit den Ansaugöffnungen in einem vorderen oder hinteren Bereich ausgebildet ist.

Der erfindungsgemäße Lüftungskasten gestaltet sich konstruktiv besonders einfach, wenn die zur wahlweisen Anordnung vorgesehenen Gehäuseteile und die übrigen Gehäuseteile für ihre Verbindung jeweils einen Flansch aufweisen.

Die Verbindung zweier Gehäuseteile läßt sich gemäß einer anderen vorteilhaften Weiterbildung der Erfindung mit besonders geringem Aufwand abdichten, wenn die zur wahlweisen Anordnung vorgesehenen Gehäuseteile umlaufende, zum Übergreifen von angrenzenden Bereichen der übrigen Gehäuseteile vorgesehene Ränder aufweisen. Durch diese Gestaltung werden die Verbindungsstellen der Gehäuseteile von den umlaufenden Rändern übergriffen, so daß eine Verspannung von Flanschen zur Erzeugung einer vorgesehenen Dichtheit nicht mehr erforderlich ist.

Die Abmessungen der Flansche und/oder der umlaufenden Ränder sind gemäß einer anderen vorteilhaften Weiterbildung der Erfindung besonders klein, wenn die Flansche und/oder die umlaufenden Ränder jeweils in etwa senkrecht zur Strömungsrichtung angeordnet sind. Durch die geringen Abmessungen der Flansche gestaltet sich deren Abdichtung besonders einfach und kostengünstig und es wird wenig Einbauraum benötigt.

Ansaugöffnungen für Frischluft sind in der Regel auf einem durch die Stirnwand des Kraftfahrzeuges hindurchgeführten Stutzen angeordnet. Der Stutzen läßt sich gemäß einer anderen vorteilhaften Weiterbildung der Erfindung auf beiden Fahrzeugseiten durch die Stimwand hindurchführen, wenn die Flansche und/oder die umlaufenden Ränder bezogen auf den Fahrzeugboden in etwa vertikal angeordnet sind.

Die zur wahlweisen Anordnung auf der linken oder der rechten Fahrzeugseite vorgesehenen Gehäuseteile lassen sich gemäß einer anderen vorteilhaften Weiterbildung der Erfindung sehr einfach in dem der Lenksäule abgewandten Bereich des Kraftfahrzeuges anordnen, wenn die zur wahlweisen Anordnung vorgesehenen Gehäuseteile gegenüber den übrigen Gehäuseteilen verdrehbar sind.

Vorzugsweise ist eines der wahlweise befestigbaren Gehäuseteile Teil einer Frischluft-/Umluftklappe. Günstig ist es außerdem, wenn eines der wahlweise befestigbaren Gehäuseteile Teil eines Gebläsekastens ist. Gemäß diesen Weiterbildungen der Erfindung müssen die Lagerhaltung vereinfachend besonders großvolumige Bauteile des Lüftungskastens lediglich in einer einzigen Bauform vorgehalten werden.

Besonders vorteilhaft ist es in diesem Zusammenhang auch, wenn eines der wahlweise befestigbaren Gehäuseteile Teil eines üblicherweise großflächigen und damit ebenfalls erhebliche Lager- und Transportkapazitäten beanspruchenden Diffusors ist.

Eine besonders kompakte Anordnung des Lüftungskastens wird gemäß einer vorteilhaften Weiterbildung der Erfindung dadurch erzielt, daß der Gebläsekasten ein Gebläserad und einen Gebläsemotor aufweist. Vorzugsweise ist der Gebläsemotor bezogen auf den Fahrzeugboden an der Ober- oder Unterseite des Gebläsekastens angeordnet, so daß zum einen der Motor für Instandhaltungsarbeiten zugänglich ist und ein großer Strömungsquerschnitt innerhalb des Gebläsekastens freigehalten wird und zum anderen durch die in etwa vertikale Anordnung der Fahrgastraum, insbesondere der Beifahrerfußraum, durch den Gebläsemotor nicht eingeschränkt wird.

Gemäß einer vorteilhaften Weiterbildung der Erfindung ist der Gebläsemotor mit dem Gebläsekasten lösbar verbunden, womit ein leichter Austausch des Motors und gegebenenfalls des Gebläserades, wenn letzteres mit der Motorwelle ein einziges Bauteil bildend verbunden ist, im Schadensfall möglich ist.

Von besonderem Vorteil ist es, wenn der Gebläsekasten bezogen auf den Fahrzeugboden an seiner Ober- und Unterseite sich jeweils entsprechende Anschlußelemente für den Gebläsemotor aufweist. Auf diese Weise kann der Motor unabhängig davon, ob der Gebläsekasten in nicht verdrehter oder in um etwa 180° verdrehter Lage in den Lüftungskasten eingebaut ist, immer an der Oberseite (d. h. stehend) oder an der Unterseite (d. h. hängend) des Gebläsekastens montiert werden. Bevorzugt ist der hängende Einbau, der im Instandsetzungsfall einen besonders einfachen Zugang zum Gebläsemotor über den Fahrgastraum, insbesondere den Beifahrerfußraum, ermöglicht. Die jeweils nicht benötigten Anschlußelemente sind mit einem Blindstopfen versehen.

Man könnte sich vorstellen, den Gebläsemotor an den Gebläsekasten anzuflanschen. Besonders einfach und ohne zusätzliches Werkzeug durchzuführen ist eine Montage oder Demontage des Motors aber dann, wenn gemäß einer vorteilhaften Weiterbildung der Erfindung die Verbindung von Gebläsemotor und Gebläsekasten ein Bajonettverschluß ist.

Die Erfindung läßt zahlreiche Ausführungsformen zu. Zur weiteren Verdeutlichung ihres Grundprinzips sind zwei davon in der Zeichnung dargestellt und werden nachfolgend beschrieben. Diese zeigt in
- Figur 1: einen erfindungsgemäßen Lüftungskasten für ein Kraftfahrzeug mit einer auf der linken Fahrzeugseite angeordneten Lenksäule,
- Figur 2: den erfindungsgemäßen Lüftungskasten aus Figur 1 bei einem Kraftfahrzeug mit einer auf der rechten Fahrzeugseite angeordneten Lenksäule,
- Figur 3: einen weiteren Lüftungskasten für ein Kraftfahrzeug mit einer auf der linken Fahrzeugseite angeordneten Lenksäule, der nicht zu der Erfindung gehört,
- Figur 4: den Lüftungskasten aus Figur 3 bei einem Kraftfahrzeug mit einer auf der rechten Fahrzeugseite angeordneten Lenksäule.

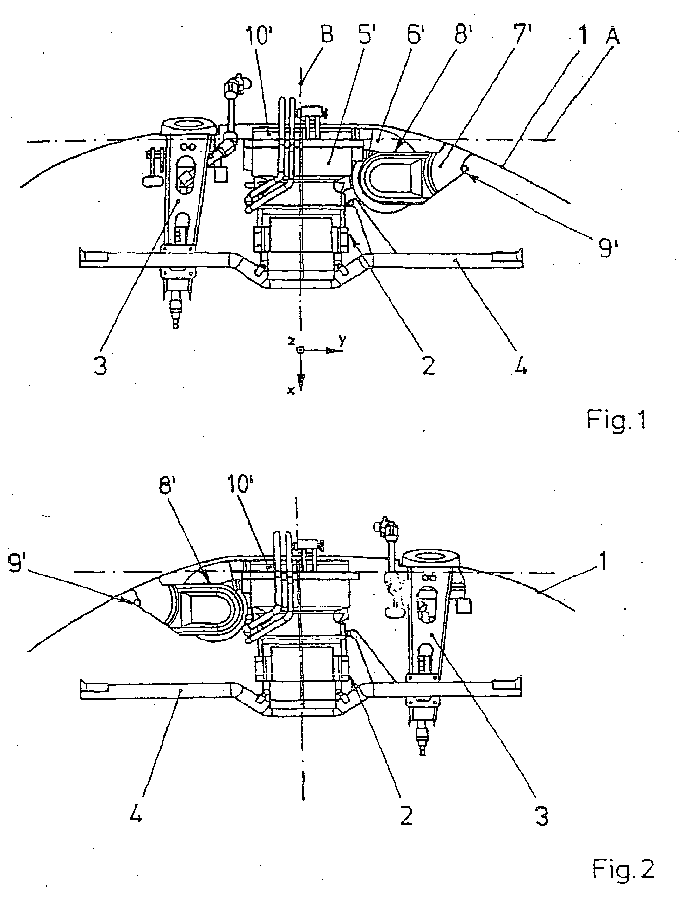

Die Figur 1 zeigt einen vor einer schematisch dargestellten Stimwand 1 angeordneten Lüftungskasten 2 in einer Ansicht von oben. Ein Kraftfahrzeug-Koordinatensystem xyz gibt die Richtung der Fahrzeug-Längsachse (x-Achse), der Fahrzeug-Querachse (y-Achse) und der Fahrzeug-Hochachse (z-Achse) an. Die Fahrzeug-Längsachse ist als strichpunktierte Linie B in Figur 1 zusätzlich eingezeichnet.

Auf der linken Seite neben dem Lüftungskasten 2 ist eine Lenksäule 3 angeordnet. Der Lüftungskasten 2 und die Lenksäule 3 sind an einem Querträger 4 befestigt. Der Lüftungskasten 2 ist aus mehreren Gehäuseteilen 5', 6', 7' und 10' zusammengesetzt. Das größte Gehäuseteil 5' des Lüftungskastens 2 ist ebenso wie ein Diffusor 10' in einem vorderen mittleren Bereich des Kraftfahrzeuges angeordnet. Auf der rechten Fahrzeugseite weist der Lüftungskasten 2 Gehäuseteile 6', 7' eines Gebläsekastens 8' und einer Frischluft-/Umluftklappe 9' auf.

Eine strichpunktierte Linie A bezeichnet eine vertikale Trennebene, in der die Gehäuseteile 5' und 10' einen Verbindungsflansch aufweisen. Der Diffusor 10' ist zusammen mit dem Gebläsekasten 8' und der Frischluft-/Umluftklappe 9' in der in Figur 1 dargestellten Lage an dem Gehäuseteil 5' befestigbar oder in einer um die Fahrzeug-Längsachse B, die die Flanschfläche der Gehäuseteile 5' und 10' mittig und senkrecht schneidet, um 180° verdrehten Position, wie in Figur 2 gezeigt. Gleiche Bauteile sind dabei - wie auch im folgenden - mit gleichen Bezugszeichen versehen.

In Figur 2 ist die Lenksäule 3 auf der rechten Seite des Lüftungskastens 2 aus Figur 1 angeordnet. Der Gebläsekasten 8' und die Frischluft-/Umluftklappe 9' sind auf der linken Fahrzeugseite, der Diffusor 10' nach wie vor in etwa fahrzeugmittig, aber in gegenüber Gehäuseteil 5' gedrehter Lage angeordnet.

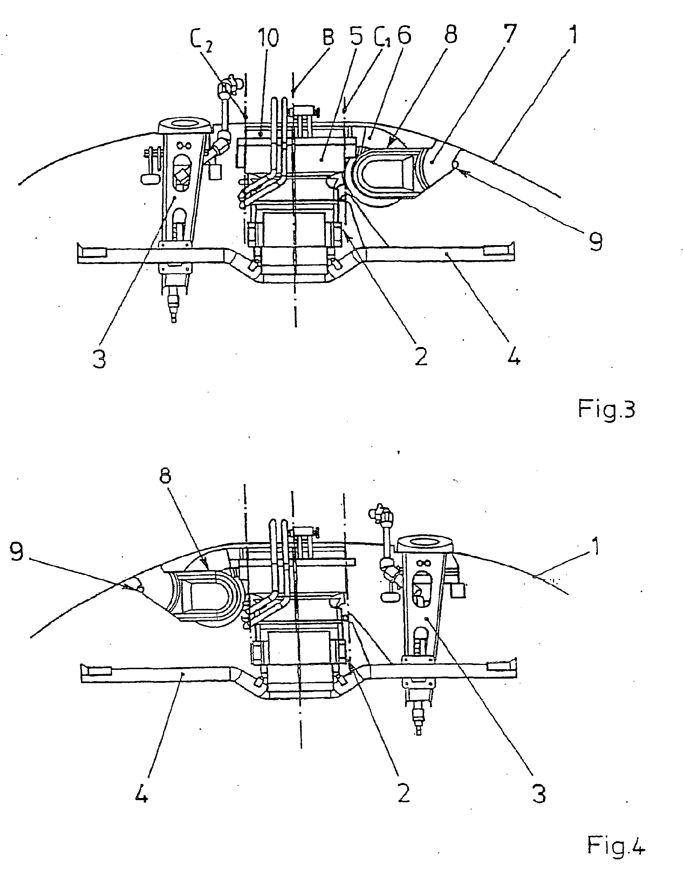

Die Figur 3 zeigt einen weiteren, vor einer schematisch dargestellten Stirnwand 1 angeordneten Lüftungskasten 2 in einer Ansicht von oben. Auf der linken Seite neben dem Lüftungskasten 2 ist eine Lenksäule 3 angeordnet. Der Lüftungskasten 2 und die Lenksäule 3 sind an einem Querträger 4 befestigt. Der Lüftungskasten 2 ist aus mehreren Gehäuseteilen 5 - 7 und 10 zusammengesetzt. Das größte Gehäuseteil 5 des Lüftungskastens 2 ist ebenso wie ein Diffusor 10 in einem vorderen mittleren Bereich des Kraftfahrzeuges angeordnet. Auf der der Lenksäule 3 gegenüberliegenden Seite des größten Gehäuseteils 5 weist der Lüftungskasten 2 Gehäuseteile 6, 7 eines Gebläsekastens 8 und einer Frischluft-/Umluftklappe 9 auf.

Eine strichpunktierte Linie B gibt die Fahrzeuglängsachse an. Mit C, und C₂ sind Trennebenen zu einer wahlweisen Befestigung von Gehäuseteilen auf der linken oder der rechten Seite des Kraftfahrzeuges bezeichnet, wobei die Gehäuseteile in der Trennebene einen Trennflansch aufweisen.

Der jeweils nicht angeschlossene Trennflansch der in einem mittleren Bereich der Fahrgastzelle angeordneten Gehäuseteile kann z. B. mit einer Platte oder einem Blindstopfen verschlossen sein. In Figur 3 ist dieses der in der Ebene C₂ angeordnete Flansch.

In Figur 4 ist die Lenksäule 3 auf der rechten Seite des Lüftungskastens 2 aus Figur 3 angeordnet. Die dem Gebläsekasten 8 und der Frischluft-/Umluftklappe 9 zugehörigen Gehäuseteile 6, 7 sind auf der der Lenksäule 3 gegenüberliegenden Seite des größten Gehäuseteils 5 angeordnet.

## Patentansprüche

1. Zur Anordnung in einem Kraftfahrzeug vorgesehener Lüftungskasten (2) mit mehreren Gehäuseteilen (6, 7) zur Führung von Frischluft aus der Umgebung oder von Umluft in die Fahrgastzelle, welche wahlweise an der einen oder anderen, einer Lenksäule (3) des Kraftfahrzeuges gegenüberliegenden Seite der Fahrgastzelle zu befestigen sind, wobei der Lüftungskasten (2) sowohl für die Linksanordnung als auch für die Rechtsanordnung ein zur etwa fahrzeugmittigen Befestigung ausgebildetes, erstes Gehäuseteil (5') hat und wobei die Gehäuseteile (6', 7') an einem in Fahrtrichtung vor dem ersten Gehäuseteil (5') einbaubaren Gehäuseteil (10') vorgesehen sind, **dadurch gekennzeichnet*,* dass** das in Fahrtrichtung vor dem ersten Gehäuseteil (5') einbaubare Gehäuseteil (10') zur wahlweisen Befestigung an dem ersten Gehäuseteil (5') an einer quer zur Fahrzeuglängsachse (B) verlaufenden Trennebene (A) in zwei Positionen ausgebildet ist, welche in etwa 180° gegeneinander verdreht sind, so dass nur ein einziger Lüftungskasten (2) zur wahlweisen Anordnung der Lenksäule (3) auf der linken oder rechten Fahrzeugseite vorgesehen ist.

2. Lüftungskasten nach Anspruch 1, **dadurch gekennzeichnet, dass** die zur wahlweisen Anordnung vorgesehenen Gehäuseteile (10') und die übrigen Gehäuseteile (5') für ihre Verbindung jeweils einen Flansch aufweisen.

3. Lüftungskasten nach einem der vorhergehenden Ansprüche, **dadurch gekennzeichnet, dass** die zur wahlweisen Anordnung vorgesehenen Gehäuseteile (10') umlaufende, zum Übergreifen von angrenzenden Bereichen der übrigen Gehäuseteile (5') vorgesehene Ränder aufweisen.

4. Lüftungskasten nach Anspruch 2 oder 3, **dadurch gekennzeichnet, dass** die Flansche und/oder die umlaufenden Ränder in etwa senkrecht zur Strömungsrichtung angeordnet sind.

5. Lüftungskasten nach einem der Ansprüche 2 bis 4, **dadurch gekennzeichnet, dass** die Flansche und/oder die umlaufenden Ränder bezogen auf den Fahrzeugboden in etwa vertikal angeordnet sind.

6. Lüftungskasten nach einem der vorhergehenden Ansprüche, **dadurch gekennzeichnet, dass** die zur wahlweisen Anordnung vorgesehenen Gehäuseteile (6', 7', 10') gegenüber den übrigen Gehäuseteilen (5') verdrehbar sind.

7. Lüftungskasten nach einem der vorhergehenden Ansprüche, **dadurch gekennzeichnet, dass** eines der wahlweise befestigbaren Gehäuseteile (7') Teil einer Frischluft-/Umluftklappe (9') ist.

8. Lüftungskasten nach einem der vorhergehenden Ansprüche, **dadurch gekennzeichnet, dass** eines der wahlweise befestigbaren Gehäuseteile (6') Teil eines Gebläsekastens (8') ist.

9. Lüftungskasten nach Anspruch 8, **dadurch gekennzeichnet, dass** der Gebläsekasten (8') ein Gebläserad und einen Gebläsemotor aufweist.

10. Lüftungskasten nach Anspruch 9, **dadurch gekennzeichnet, dass** der Gebläsemotor bezogen auf den Fahrzeugboden an der Ober- oder Unterseite des Gebläsekastens (8') angeordnet ist.

11. Lüftungskasten nach Anspruch 9 oder 10, **dadurch gekennzeichnet, dass** der Gebläsemotor mit dem Gebläsekasten (8') lösbar verbunden ist.

12. Lüftungskasten nach einem der Ansprüche 9 bis 11, **dadurch gekennzeichnet, dass** der Gebläsekasten (8') bezogen auf den Fahrzeugboden an seiner Ober- und Unterseite sich jeweils entsprechende Anschlusselemente für den Gebläsemotor aufweist.

13. Lüftungskasten nach einem der Ansprüche 9 bis 12, **dadurch gekennzeichnet, dass** die Verbindung von Gebläsemotor und Gebläsekasten (8') ein Bajonettverschluss ist.

14. Lüftungskasten nach einem der vorhergehenden Ansprüche, **dadurch gekennzeichnet, dass** eines der wahlweise befestigbaren Gehäuseteile (10') Teil eines Diffusors ist.

## Claims

1. Ventilation unit (2) provided for arrangement in a motor vehicle, comprising a plurality of housing parts (6, 7) for conducting fresh air from the environment or recirculated air into the passenger cell, which housing parts (6, 7) can be fixed selectively on one side or the other of the passenger cell opposite a steering column (3) of the motor vehicle, the ventilation unit (2) having a first housing part (5') configured for attachment at approximately the centre of the vehicle for both the left-hand and the right-hand arrangement, and the housing parts (6', 7') being provided on a housing part (10') which can be installed in front of the first housing part (5') in the forward direction of travel, **characterized in that** the housing part (10') which can be installed in front of the first housing part (5') in the forward direction of travel is configured for selective attachment to the first housing part (5') in a parting plane (A) disposed transversely to the longitudinal axis (B) of the vehicle, in two positions which are rotated through approximately 180° with respect to one another, so that only a single ventilation unit (2) is provided for selective arrangement of the steering column (3) on the left-hand or the right-hand side of the vehicle.

2. Ventilation unit according to Claim 1, **characterized in that** the housing parts (10') provided for selective arrangement and the other housing parts (5') each have a flange for connection thereof.

3. Ventilation unit according to either of the preceding claims, **characterized in that** the housing parts (10') provided for selective arrangement have peripheral edges provided for overlapping adjacent areas of the other housing parts (5').

4. Ventilation unit according to Claim 2 or 3, **characterized in that** the flanges and/or the peripheral edges are arranged approximately perpendicularly to the direction of flow.

5. Ventilation unit according to any one of Claims 2 to 4, **characterized in that** the flanges and/or the peripheral edges are arranged approximately vertically in relation to the floor of the vehicle.

6. Ventilation unit according to any one of the preceding claims, **characterized in that** the housing parts (6', 7', 10') provided for selective arrangement are rotatable with respect to the other housing parts (5').

7. Ventilation unit according to any one of the preceding claims, **characterized in that** one of the selectively fixable housing parts (7') is a part of a fresh air/recirculated air flap (9').

8. Ventilation unit according to any one of the preceding claims, **characterized in that** one of the selectively fixable housing parts (6') is a part of a blower housing (8').

9. Ventilation unit according to Claim 8, **characterized in that** the blower housing (8') has a blower wheel and a blower motor.

10. Ventilation unit according to Claim 9, **characterized in that** the blower motor is arranged on the upper or lower side of the blower housing (8') in relation to the floor of the vehicle.

11. Ventilation unit according to Claim 9 or 10, **characterized in that** the blower motor is connected detachably to the blower housing (8').

12. Ventilation unit according to any one of Claims 9 to 11, **characterized in that** the blower housing (8') has on its upper and lower sides, in relation to the floor of the vehicle, respective corresponding connecting elements for the blower motor.

13. Ventilation unit according to any one of Claims 9 to 12, **characterized in that** the connection of blower motor to blower housing (8') is a bayonet connection.

14. Ventilation unit according to any one of the preceding claims, **characterized in that** one of the selectively fixable housing parts (10') is a part of a diffuser.

## Revendications

1. Caisson de ventilation (2) destiné à être agencé dans un véhicule automobile, avec plusieurs éléments de carter (6, 7) pour la conduction d'air frais environnant ou d'air recirculé dans l'habitacle, qui sont à fixer au choix sur l'un ou sur l'autre côté de l'habitacle qui est opposé à une colonne de direction (3) du véhicule automobile, le caisson de ventilation (2) étant muni d'un premier élément de carter (5') destiné à être fixé quasiment au centre du véhicule aussi bien pour son agencement à gauche que pour son agencement à droite, et les éléments du carter (6', 7') étant prévus sur un élément de carter (10') pouvant être monté à l'avant du premier élément du carter (5') dans le sens de déplacement, **caractérisé en ce que** la partie du carter (10') pouvant être montée à l'avant du premier élément du carter (5') dans le sens de déplacement est conçue, pour sa fixation au choix sur le premier élément du carter (5'), sur un plan de séparation (A) s'étendant à la transversale de l'axe longitudinal (B) du véhicule en deux positions qui sont tournées à environ 180° l'une par rapport à l'autre, de sorte qu'un seul caisson de ventilation (2) est prévu, pour un agencement au choix de la colonne de direction (3), soit du côté gauche ou du côté droit du véhicule.

2. Caisson de ventilation selon la revendication 1, **caractérisé en ce que** les éléments de carter (10') prévus pour un agencement au choix et les autres éléments de carter (5') sont respectivement munis d'une bride, pour leur liaison.

3. Caisson de ventilation selon l'une quelconque des revendications précédentes, **caractérisé en ce que** les éléments de carter (10') prévus pour un agencement au choix sont munis de bords périphériques, destinés à chevaucher les zones adjacentes des autres éléments de carter (5').

4. Caisson de ventilation selon la revendication 2 ou 3, **caractérisé en ce que** les brides et/ou les bords périphériques sont agencés en position quasiment perpendiculaire au sens d'écoulement.

5. Caisson de ventilation selon l'une quelconque des revendications 2 à 4, **caractérisé en ce que** les brides et/ou les bords périphériques sont agencés quasiment à la verticale, par rapport au fond du véhicule.

6. Caisson de ventilation selon l'une quelconque des revendications précédentes, **caractérisé en ce que** les éléments de carter (6', 7'; 10') prévus pour un agencement au choix peuvent être tournés par rapport aux autres éléments de carter (5').

7. Caisson de ventilation selon l'une quelconque des revendications précédentes, **caractérisé en ce que** l'un des éléments de carter (7') pouvant être fixés au choix est un élément d'un régulateur d'air frais / d'air recirculé (9').

8. Caisson de ventilation selon l'une quelconque des revendications précédentes, **caractérisé en ce que** l'un des éléments de carter (6') pouvant être fixés au choix est un élément d'un caisson d'une soufflerie (8').

9. Caisson de ventilation selon la revendication 8, **caractérisé en ce que** le caisson de la soufflerie (8') est muni d'une roue de soufflerie et d'un moteur de soufflerie.

10. Caisson de ventilation selon la revendication 9, **caractérisé en ce que** le moteur de la soufflerie est disposé sur la face supérieure ou inférieure du caisson de la soufflerie (8'), par rapport au fond du véhicule.

11. Caisson de ventilation selon la revendication 9 ou 10, **caractérisé en ce que** le moteur de la soufflerie est relié de façon amovible au caisson de la soufflerie (8').

12. Caisson de ventilation selon l'une quelconque des revendications 9 à 11, **caractérisé en ce que** sur sa face supérieure ou inférieure par rapport au fond du véhicule, le caisson de la soufflerie (8') est muni d'éléments de raccordement se correspondant mutuellement pour le moteur de la soufflerie.

13. Caisson de ventilation selon l'une quelconque des revendications 9 à 12, **caractérisé en ce que** la liaison entre le moteur de la soufflerie et le caisson de la soufflerie (8') est un raccord à baïonnette.

14. Caisson de ventilation selon l'une quelconque des revendications précédentes, **caractérisé en ce que** l'un des éléments de carter (10') pouvant être fixés au choix est un élément d'un diffuseur.
